(19) Europäisches Patentamt
European Patent Office
Office européen des brevets

(11) **EP 4 016 328 A1**

(12) **EUROPEAN PATENT APPLICATION**

(43) Date of publication:
**22.06.2022 Bulletin 2022/25**

(21) Application number: **20383120.1**

(22) Date of filing: **18.12.2020**

(51) International Patent Classification (IPC):
***G06F 16/28*** (2019.01)

(52) Cooperative Patent Classification (CPC):
**G06F 16/285; G06N 5/00; G06Q 30/02; G06Q 40/02; G06Q 40/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica Digital España, S.L.U.**
**28013 Madrid (ES)**

(72) Inventor: **Frias-Martinez, Enrique**
**28013 Madrid (ES)**

(74) Representative: **Carlos Hernando, Borja**
**Garrigues IP, S.L.P.**
**Hermosilla, 3**
**28001 Madrid (ES)**

(54) **METHOD, SYSTEM AND COMPUTER PROGRAMS FOR OUTLIER DETECTION OF DATA PROVIDED BY IOT DEVICES**

(57) A method, system and computer programs for outlier detection of data provided by IoT devices are provided. The method performs clustering to a set of history data, generating a given number of clusters, ranks the clusters according to a number of items in each cluster, and labels the ranked number of clusters as normal-behavior clusters or as non-normal behavior clusters. A set of n-dimensional points of each labeled normal-behavior cluster are identified by defining the limits thereof via a layout pattern, providing one or more n-dimensional pattern elements; and a maximum and a minimum value of each n-dimensional point within each n-dimensional pattern element is obtained using a comparison-based sorting algorithm. Given a new data observation read by a IoT device, an angle-based outlier detection metric is applied to points defining each n-dimensional pattern element. The method indicates whether the new data observation is an outlier considering a computed maximum value.

**Fig. 2**

Processed by Luminess, 75001 PARIS (FR)

EP 4 016 328 A1

**Description**

TECHNICAL FIELD

The present invention is directed, in general, to the field of anomaly detection. In particular, the invention relates to a method, system, and computer programs for outlier detection of data provided by IoT devices (or sensors or actuators), i.e. a piece of hardware with a sensor that transmits data over a network.

BACKGROUND OF THE INVENTION

Outlier detection has received extensive research within the area of data mining due to its variety of applications, ranging from telecom [8] and credit card fraud [6], loan approval [9], health and pharmaceutical research [5], intrusion detection [7], weather prediction, financial applications and marketing and customer segmentation. The concept of what is an outlier is ill-defined, in general a data point is considered an outlier if is a point that is considerably dissimilar when compared to the rest of the data points. Formally an outlier is considered as such if it deviates three or more standard deviations from the mean. Nevertheless, even such a simplistic definition is not generally accepted and will depend on the actual distribution of the data and the application.

In the context of IoT networks, devices are made of sensors that sense environmental/behavioral parameters in order to carry out a task. Before carrying out this task, it is essential to check if the observations (i.e. a read of the environment produced by the IoT device) are outliers as that will indicate a strong deviation from the expected behavior of the system and will usually require special attention. Different families of algorithms have been considered for outlier detection. Although there is not a universal classification, broadly they can be: Statistical-based methods, which identify outliers using the data distribution model; Density-based methods, that assume that an outlier is found in low-density regions; Clustering-based methods, which use traditional clustering techniques for the identification of outliers, which correspond to data points that are not part of any big cluster; Distance-based methods, where a point is viewed as an outlier it is far away from its neighbors; and Machine & Deep Learning methods, which use machine (or deep) learning techniques to identify outliers by learning the model of the data and as such label as outlier any point that does not follow the model. In the literature we can find different papers presenting very complete reviews of outlier detection [1][2][3][4]. This reviews of the state of the art do not necessarily follow the classification previously given and in general include different perspectives such application based classification.

When applied to IoT networks, outlier identification has its own characteristics, but the state of the art is still completely valid as in general any application can be potentially deployed using IoT networks. There are some particularities when focusing in IoT anomaly detection for security purposes such as intrusion detection, but the focus of present invention is on the applications side. Focusing on the application, there are some characteristics that affect which techniques are implementable and under which conditions in an IoT settings, mainly: data privacy is a common concern of any IoT network, and as such avoiding sending the data to a central repository to be analyzed and instead do all the process in the sensor provides the privacy and security needed; in general sensors have a limited computational capability, so if identification is done locally a simple outlier detection algorithm needs to be applied; if complex techniques are applied they should be implemented in a way that the computationally expensive part of the model is executed once in a central repository and send to the sensors of the network that will just implement the checking for the identification of outliers; and the fact that there is a network introduces a latency for identifying outliers that has to be considered when implementing the outlier detection for a specific application.

As previously mentioned, the state of the art of outlier detection has a wide variety of techniques and each one of those techniques has its own advantages and limitations. Following, some of the limitations are detailed when considering that the technique is going to be applied to an IoT environment. This implies certain characteristics that will be faced by the technique selected, mainly: data of low dimensionality (with the exception of voice, image and video which are not covered by the present invention); sensors with reduced computational capabilities; possible need to limit the data send over the network to guarantee privacy and anonymity; the variety of applications of an IoT network typically requires a previous knowledge of each one of them when implementing the outlier technique.

Given the previous characteristics, regarding statistical methods the main limitation is that they imply the construction of a probabilistic data model, which implies a computationally complex process that cannot be done in a sensor/device of the network. As such, data needs to be transmitted for the model to be generated, this implies that the detection is not done locally, and that data is not kept private. These models are also based on some previous distribution of the data which is not necessarily the case in real applications. As a partial solution, the generation of the model can be done off-line, but in this case the outlier identification is by comparison to the data model, and the complexity of this comparison and the memory needed implies that can only be done in a centralized way, which implies lack of the adaptability of the outlier technique to the characteristics of an IoT network. These limitations can also be applied to density-based methods and distance-based methods, which in general have a quadratic complexity (although there are optimized versions) that highly limits its application in an IoT setting for the same previous reasons. Both density and distance-based methods have in general a set of parameters that need to be defined which implies trial and error and/or the use of previous knowledge. Clustering methods also depend on previous knowledge of the application (i.e. setting the number of clusters) and are also very sensitive to initialization phase. They also face the problem that even if the data is clustered, the models that represent the cluster are the data points, which implies again computational expensive process and memory needs. As for Machine & Deep learning based methods in general require larger quantities of data to create the models which implies a high computational cost, and the same limitations of clustering approaches apply.

References

[1] Hodge, V. and Austin, J., 2004. A survey of outlier detection methodologies. Artificial intelligence review, 22(2), pp.85-126.

[2] Chandola, V., Banerjee, A. and Kumar, V., 2009. Anomaly detection: A survey. ACM computing surveys , 41(3), p.15.

[3] Campos, G.O., Zimek, A., Sander, J., Campello, R.J., Micenková, B., Schubert, E., Assent, I. and Houle, M.E., 2016. On the evaluation of unsupervised outlier detection: measures, datasets, and an empirical study. Data Mining and Knowledge Discovery, 30(4), pp.891-927.

[4] Wang, H., Bah, M.J. and Hammad, M., 2019. Progress in Outlier Detection Techniques: A Survey. IEEE Access, 7, pp.107964-108000.

[5] Spence, Clay, Lucas Parra, and Paul Sajda. "Detection, synthesis and compression in mammographic image analysis with a hierarchical image probability model." Proceedings IEEE workshop on mathematical methods in biomedical image analysis (MMBIA 2001). IEEE, 2001.

[6] ALESKEROV, E., FREISLEBEN, B., AND RAO, B. 1997. Cardwatch: A neural network based database mining system for credit card fraud detection. In Proceedings of the IEEE Conference on Computational Intelligence for Financial Engineering. 220-226. ALLAN, J., CARBONELL, J., DODDINGTON, G., Y

[7] Jabez, Ja, and B. Muthukumar. "Intrusion detection system (IDS): anomaly detection using outlier detection approach." Procedia Computer Science 48 (2015): 338-346.

[8] Niu, Kun, et al. "A Real-Time Fraud Detection Algorithm Based on Intelligent Scoring for the Telecom Industry." 2016 International Conference on Networking and Network Applications (NaNA). IEEE, 2016.

[9] Ahmed, Mohiuddin, Abdun Naser Mahmood, and Md Rafiqul Islam. "A survey of anomaly detection techniques in financial domain." Future Generation Computer Systems 55 (2016): 278-288.

## DESCRIPTION OF THE INVENTION

Present invention provides a method for outlier identification especially designed for its implementation in and IoT architecture, implying: it is not necessarily previous knowledge of the application area as the method is non-parametric; it is optimized for low-dimensional data, typically captured by the majority of IoT devices; its low computational complexity allows for the identification of an outlier to be done locally in the device if needed; and if necessary, data privacy can be guaranteed by the IoT network, as no information of the IoT device needs to be shared if the proper architecture is implemented.

To that end, embodiments of the present invention provide, according to one aspect, a computer implemented method for outlier detection of data provided by IoT devices, wherein a set of history data observations about one or more IoT devices for different types of applications is stored in a central computing platform, the set of history data comprising expected behaviors of the applications and also outliers. The method comprises: a) performing, by one or more processors, clustering to at least part of the set of history data, generating a given number of clusters as a result; b) ranking, by one or more processors, the given number of clusters according to a number of items in each cluster, and labeling the ranked number of clusters as normal-behavior clusters or as non-normal behavior clusters; c) identifying, by one or more processors, a set of n-dimensional points of each labeled normal-behavior cluster by defining the limits thereof by means of applying a layout pattern, providing one or more n-dimensional pattern elements as a result, and obtaining a maximum and a minimum value of each n-dimensional point within each n-dimensional pattern element using a comparison-based sorting algorithm; d) given a new data observation read by a given IoT device, applying, by one or more processors, an angle-based outlier detection metric to the points that define each n-dimensional pattern element, said angle-based outlier detection metric computing a maximum value of the angles between the new data observation and pairs of the n-dimensional element, weighted by a distance between the points; and e) indicating, by one or more processors, whether the new data observation is an outlier in view of said computed maximum value.

In an embodiment, a cluster is labeled as normal-behavior cluster only if a percentage of the items of said cluster with respect to the total of the history data is greater than a minimum behavior threshold.

In an embodiment, the method also compares the computed maximum value with a threshold, and indicates that the new data observation is an outlier if the computed maximum value is smaller than the threshold. Likewise, the method can further decide an action to apply to the computed maximum value depending on a specific application. The action can include any of: deleting the computed maximum value, applying a correction to the computed maximum value, sending the computed maximum value to a central repository for further analysis, alerting or stopping the given IoT device, etc.

In an embodiment, in step d) the method comprises receiving a set of new data observations read by a plurality of IoT devices. Thus, in this case the method comprises applying the angle-based outlier detection metric to each received new data observation and computing a maximum value for each received new data observation. Equally, step e) comprises ranking the plurality of new data observations from a higher to a lower computed maximum value. This ranking can be performed continuously in time as new data observations are received, or only after a given time interval is over, or for a given geographical area only.

According to the proposed method, the clustering can be performed via a clustering algorithm such as k-means, k-medoids, k-medians, fuzzy c-means, a Gaussian mixture model, among others. Likewise, the layout pattern can be a hyperrectangle, a rectangle or a prism.

In a particular embodiment, step a) further comprises applying a cohesion metric to the generated given number of clusters to maximize cohesion between them, for example Silhouette, Dunn or Davies-Bouldin can be used as cohesion metrics.

Particularly, the given number of clusters generated in step a) is between 1 and 10.

In an embodiment, steps a) to c) are executed off-line by the central computing platform, whereas steps d) and e) can be executed either off-line or in real time. Alternatively, steps d) and e) are executed by the given IoT device. Even, steps d) and e) can be executed by a Gateway operatively connected to the given IoT device.

The proposed method is non-parametrical implying that users do not need to define any parameter for the process - all parameters given are assigned a predefined value. Parameter estimation for outlier detection can be complex as it depends on the technique used and on the application itself, and as a results it typically requires lot of expertise and/or a trial and error process.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The multi-layered approach used to implement present invention is key for the fast identification of outliers, as it allows doing the expensive part of the process off-line, i.e. the identification of the normal (non-outlier) behavior; and the real-time classification of the observations is implemented by just applying the outlierness metric against the already-defined normal behavior. The flexibility of the architecture with which the method can be implemented allows for a set of different implementations that can adapt to the requirements of different applications.

Likewise, the method is especially suited to manage the complexities of outlier identification while maximizing the computing capabilities of IoT networks to identify the possible outliers in a cost-effective way. The main differential features of the method presented are: non-parametric; optimized for low dimension data (up to 10-dimensional data points); computationally simple (simple to be run locally on the device/sensor or on the edge); complexity is run in a centralized way.

The previous characteristics imply that the method can be implemented without the need of an extensive previous knowledge of the application. Considering the relevance of IoT networks and the need to provide extra services as a differential market factor, providing outlier detection as a service already implemented in the IoT network is very relevant. This method has been designed to be flexible regarding the architecture, which implies that it can be implemented in any kind of network, and regarding the type of application, which the exception of the low-dimension requirement.

BRIEF DESCRIPTION OF THE DRAWINGS

The previous and other advantages and features will be more fully understood from the following detailed description of embodiments, with reference to the attached figures, which must be considered in an illustrative and non-limiting manner, in which:

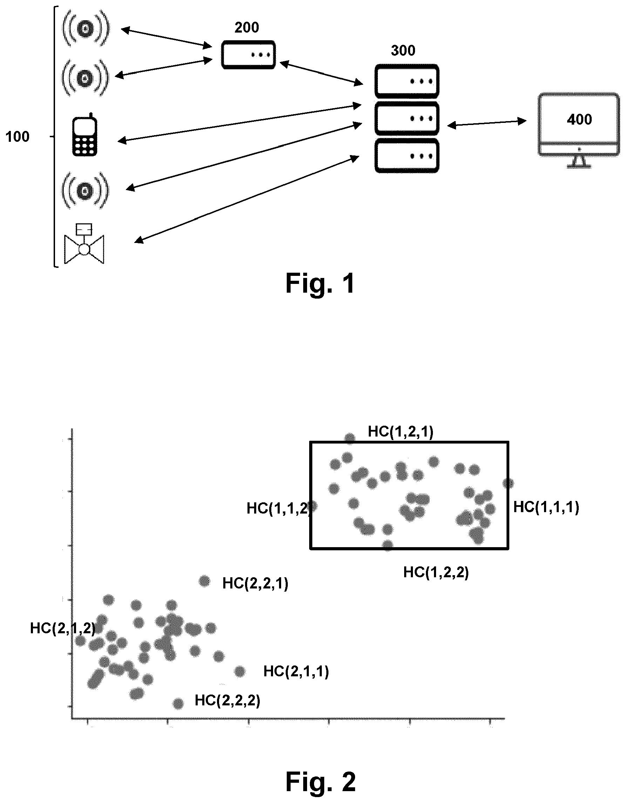

Fig. 1 illustrates an example of the elements of a generic IoT network and its interconnections. The system includes different types of devices, like cell phones for example, and also actuators that act on the environment following the instructions of the IoT platform. These devices can connect directly to the IoT central computing platform or through an edge architecture.

Fig. 2 illustrates an example of extraction of n-dimensional pattern elements such as hypercubes in a two-dimensional dataset where two normal behavior clusters have been identified by the clustering technique. The hypercube of each normal behavior cluster will be defined by 4 points, 2 in each one of the dimensions, each one defined by the maximum and the minimum value in that dimension. In the case of normal behavior cluster 1, the square (2-dimensional hypercube, HC) is defined by HC(1,1,1), HC(1,1,2), HC(1,1,2) and HC(1,2,2). In the HC data structure the first dimension indicates the normal behavior cluster, the second dimension the axis and the third dimension the maximum value (1) or the minimum value (2).

## DETAILED DESCRIPTION OF PREFERRED EMBODIMENTS

Present invention provides a method, and corresponding system, for the identification of outliers (i.e. deviations) from the information provided by a network of IoT devices. The method is designed to be computationally efficient in order to be able to run in small devices or at the edge. It is theoretically possible to implement the method proposed to any kind of dimensional data. Nevertheless, due mainly to the limitations in computational capabilities of the IoT devices/sensors, in real settings the method can be effectively applied up to 10 dimensions. Beyond that the computational limitations will impact the processing time and the results in most cases. In general, this is not a big restriction as the dimensions of IoT devices are limited in dimensions with the exception of voice, image and video.

Fig. 1 shows a basic IoT architecture for the application of the proposed method. The IoT architecture encompasses a set of elements including: IoT devices 100; a central computing platform 300; connectivity between the IoT devices 100 and the platform 300; typically (although not necessarily) the architecture also includes gateways and edge computing 200 to provide the IoT devices 100 with data storage and extended computational capabilities with low latency; and finally the application 400.

The IoT devices 100 are the point of contact between the physical environment and the IoT network. In general, they include a sensor that reads one or more inputs from the environment. These values, or some representation of these values, are sent using the connectivity to the central computing platform 300 or in case of an edge architecture to the closest edge platform/gateway 200. The central computing platform 300 usually comprises a data storage/aggregation/analysis platform and an orchestration engine. The application runs on top of the central computing platform 300 and can interact with the IoT devices 100. The connectivity can be provided in very different ways, which in general will depend on the location of the IoT devices 100. Also not all IoT devices 100 of the IoT architecture need to have the same type of connection. Different options include WiFi, 4G/5G, Ethernet, and if necessary low-power options such as Bluetooth or LPWAN. It is also common that some IoT devices 100 cannot connect directly with the central computing platform 300 (for example when interfacing with existing architectures with their own protocols); in this context, gateways 200 can interface with the central computing platform 300 and provide access with the network. Edge computing platforms also allow introducing edge computing in the IoT architecture, which shifts the computing from the central computing platform 300 to a place closer to the actual IoT device 100, which brings advantages regarding latency, data privacy and real-time processing.

Regarding the implementation of the outlier detection algorithm, typically the IoT devices 100 are the ones that provide the observations that need to be identified as outlier or normal behavior. The traditional implementation of such classification is typically done in the central computing platform 300 that has the computing capabilities to process the data and implement the algorithm. This approach also has limitations mainly that the data is sent over the network and stored in a central repository which implies data privacy policies and longer latencies. Nevertheless, working in an IoT architecture paradigm, opens new approaches to solve the identification of outliers. An alternative solution is for example, for an IoT device 100 or for the edge to implement part of the proposed outlier method locally. The proposed method exploits the advantages of implementing the outlier detection in an IoT platform and offers the capability of being computed in different parts of the IoT architecture as needed by the application 400.

In the context of an application deployed in an IoT network, outliers are defined by comparison to what can be considered normal or expected behavior. Given an application 400, the normal behavior is not necessarily just one but can encompass a set of different behaviors. In order to identify outliers it is very important to have as a starting point a good representation of the set of expected behaviors, i.e. it is necessary to have a data history of the application 400 in order to avoid a cold star problem regarding the identification of outliers. Otherwise the system could potentially identify outliers that correspond to normal behavior since not enough historic information has been gathered. In a standard IoT architecture the information is already being stored and/or aggregated in the central computing platform 300 which, combined with the fact of its computation potential, offers the natural place to characterize and identify the set of standard behaviors. This initial dataset (or initial history data) contains the set of expected behaviors but potentially will also include outliers, so when identifying and characterizing the expected behaviors the method needs to ignore/filter those outliers. In general, the amount of history data needed will depend on the frequency with which the data is generated. In any case, in general, it is application dependent. The method also assumes that the set of normal behaviors is constant over time, although it is possible that in some cases it changes. In that case the initial process of identifying and characterizing the set of expected behaviors needs to be executed over time once the set of normal behaviors change. Once the initial dataset has been used to define the expected behaviors, the data read by the IoT devices 100 on real time can be identified as outliers by comparison.

Formally the problem of identifying outliers for an IoT network can be presented as:

Given one or more n-dimensional observations $P=\{p_1, p_2, ...,p_m\}$ produced by one or more IoT devices 100, the method can rank a subset of P according to their potential of being outliers, with $S=\{s_1,..,s_m\}$ being the subset of ranked outliers and $R=\{r_1, ...,r_m\}$, with $1>r_1>...>r_m$, their associated outlier score. The ranking and scoring method should be non-parametric, have the potential to consider data privacy if necessary, and computationally efficient to adapt to the different elements of an IoT architecture. Particularly, the method can be divided in two parts: compute off-line the data model to identify and characterize the expected behaviors; and on-line identification of outliers which has to be flexible to adapt to the different elements of the architecture as defined by the application 400 requirements. The method receives as input the number (O) of data points that want to be ranked as outliers, which can expressed as an integer (O=m in this case) or a percentage of the cases to be ranked according to their outlierness.

In the following the different steps of the method are further detailed.

A. Clustering & Compactness Optimization of P:

Clustering consists on structuring a set of unclassified data points (instances or observations) by creating concepts, based on similarities found on the data. A clustering algorithm finds the set of concepts that cover all examples verifying that the similarity between instances of the same cluster is maximized; and that the similarity between instances of different clusters is minimized. Typically, in a cluster algorithm, the key element is how to obtain the similarity between two items of the training set.

In the context of outlier detection, the reason for applying clustering is based on the idea that clusters will capture the expected/normal behavior of the data, and in order to do that, smaller clusters that comprise a reduced number of items (even just one observation) will group the outliers. In general, clustering techniques consider outliers, but only to the point of ensuring that they do not interfere with the clustering process; as a result they end up forming their own clusters.

The first step of the method uses this concept to apply clustering to the set of history data in order to identify all data points that cannot be considered outliers due to the size of the cluster where they are included. The goal is not to identify outliers, but to identify regular behaviors. This process is done once and can be implemented off-line. In order to capture the set of expected/normal behaviors the concept of consistency or cohesion of the clusters is also important to guarantee that the regular (or non-outlier) behaviors are captured, as outliers will be pushed away of these clusters as a result of maximizing the cohesion. There are a variety of clustering algorithms and compactness metrics in the literature and potentially all of them can be applied. In any case, due to the need to produce a cluster with an optimized degree of compactness for the identification of normal behaviors, the recommendation is to used k-means (or any of its variations, k-medoids, k-medians, or fuzzy c-means) or GMM clustering.

Regarding the number of clusters to be generated (MAX_CLUSTERS), this number is dependent on the application 400, but in general the numbers to try are in the range 1 to 10. Beyond that it is highly uncommon to have clusters than make sense from the perspective of clustering common behavior. Even more, the extra number of cluster will not have real impact on the identification of outliers as they just will break into subgroups the original clusters identified.

Considering MAX_CLUSTERS the maximum number of clusters to be considered, CLUSTERING, the clustering algorithms selected, and COHESION_METRIC, a function that calculates the cohesion metric used, the first step of the method identifies the number of clusters that maximizes the cohesion metric. Algorithm 1 presents the steps for identifying the optimum number of clusters, OPT_CLUSTERS, and the set of clusters identified $C=\{C_1,...C_{OPT\_CLUSTERS}\}$. The set of clusters identified will contain both the normal behavior and the outlier cases. As a result there can be more than one cluster that defines normal behavior and more than one cluster than defines outlier behavior. The fact that the clusters identified are as a result of maximizing cohesion guarantees the identification of normal behaviors vs. outlier behavior.

```
Algorithm 1: COMPUTATION OF OPTIMUM CLUSTERS
Function {C, OPT_CLUSTERS}=IDENTIFY_CLUSTERS(P, MAX_CLUSTERS,
CLUSTERING, METRIC)
C={}
COHESION=0
OPT_CLUSTERS=0
For i=2...MAX_CLUSTERS
        C_TEMP=CLUSTERING(P,i)
        COHESION_TEMP=COHESION_METRIC(C_TEMP)
        If COHESION_TEMP>COHESION
```

```
                    C=C_TEMP
                    COHESION=COHESION_TEMP
                    OPT_CLUSTERS=C_TEMP
        Return {C, OPT_CLUSTERS}
```

Algorithm 1 assumes that the cohesion metric used is defined in a way that the higher the value implies the higher the cohesion is. If that is not the case, and smaller values imply higher cohesion, COHESION should be initialized to its maximum possible value and the condition to update the values should be COHESION_TEMP<COHESION.

METRIC is a parameter used to determine the optimum number of clusters that maximize the compacity of the history data that defines normal behavior. Although there is a variety of different metrics that can be used (Dunn, Davies-Bouldin or Silhouette for example), the method preferably uses Silhouette. Silhouette is a metric to evaluate the compactness and consistency of clusters of data. It ranges from -1 to +1. A high value indicates a good matching of an observation with its cluster, and inversely a low value indicates that the observation is poorly matched. In general, the average of all the values is considered.

B. Rank and Label Clusters:

In this step, the method ranks the clusters according to the number of items and then labels them as non-outliers or outliers. The set of clusters OPT_CLUSTERS will be ranked according to the number of items in each cluster from minimum to maximum number of elements. As a result of optimizing compactness in the previous step, standard (non-outlier) behaviors will contain far more elements than outlier behaviors. In an embodiment, the ranking is implemented using a MergeSort method due to its improved complexity, although other methods can be potentially used. A cluster is assigned a NORMAL_BEHAVIOR label only if it contains at least MIN_BEHAVIOR percentage (for example 1%, although not limitative) of the total history data, where Total_Percentage is a function that returns the percentage that the elements of a cluster represent over the total. Algorithm 2 presents the formal implementation of this step, with the set of clusters C, OPT_CLUSTERS and MIN_BEHAVIOR are provided as inputs.

Algorithm 2 returns as outputs the set of clusters ordered by size (CLUSTERS_ORDERED) and the set of labels assigned to each cluster (LABELS).

```
Algorithm 2: RANKING AND LABELING OF CLUSTERS
Function {CLUSTERS_ORDERED, LABEL}=RANK_AND_LABEL(C,
OPT_CLUSTERS,MIN_BEHAVIOR)
CLUSTERS_ORDERED = MERGE_SORT (C)
For i=1...OPT_CLUSTERS
        IF Total_Percentage((CLUSTERS_ORDERED(i)))<MIN_BEHAVIOR
                LABEL (i)=OUTLIER
        ELSE
                Forj=i...C
                LABEL (j)=NORMAL_BEHAVIOR
        END_IF
END_FOR
Return {CLUSTERS_ORDERED, LABEL}
```

Note that it is possible that not a single cluster is labeled as OUTLIER if the parameter MIN_BEHAVIOR is very low; this is to avoid forcing an OUTLIER label if it is not necessary. This situation has no impact on the method, as the important fact of this step is to identify NORMAL_BEHAVIOR clusters.

C. Layout Pattern of Normal Behavior Clusters

The goal of this step is to identify the set of (2n) n-dimensional points of each normal-behavior cluster that define the limits (n-dimensional perimeter) of that cluster as a layout pattern such as a hyperrectangle. Globally, for each normal-behavior cluster, the set of observations can form an n-dimensional layout pattern that includes all of the observations. As a result, the total number of instances considered will be 2*n*Number_Normal_Behavior_clusters. The identification of this set of points allows substituting all the elements/observations of the normal behavior clusters for its layout pattern. The definition of a layout pattern from the elements of a cluster can be done by identifying in each one of the dimensions the two n-dimensional points than contain the maximum and the minimum value for that dimension.

From an outlier identification perspective, the idea is that if an instance is an outlier considering just the points that define the layout pattern (e.g. the hyperrectangle) of the cluster; it will also be an outlier when compared with any observation included in the hyperrectangle, and vice versa. The use of layout patterns for the identification of outliers allows to drastically reduce the complexity of the process as it is just needed to compare the outlier candidate against the points than define the layout pattern instead of the whole set of historic observations than define the normal behavior. In particular, the data structure of a hyperrectangle is very simple and can be send over the IoT network if needed very efficiently. Fig. 2 presents an example for a two-dimensional dataset of this concept, where two clusters have been identified as normal behavior. In this context, a hyperrectangle (or just rectangle in 2D) would be defined by two points in each dimension, for a total of 4 2-dimensional points per cluster.

Starting from the output of the previous step, {CLUSTERS_ORDERED, LABEL}, first, only the clusters with its label being NORMAL_BEHAVIOR are considered. If the value is OUTLIER the cluster and its elements are filtered. The set of remaining clusters are stored in the data structure of SET_NORMAL_CLUSTERS, with no label, which implicitly is the NORMAL_BEHAVIOR label.

Given the set of clusters identified as normal behavior (SET_NORMAL_CLUSTERS), n the dimension of the observations, and FIND_MAXIMUM_INSTANCE and FIND_MINIMUM_INSTANCE, as two functions that return the instance with the maximum and minimum value in a given dimension, Algorithm 3 returns the set of hypercubes (SET_HC) of the set of normal behavior clusters.

```
Algorithm 3: HYPERCUBES_OF_NORMAL_CLUSTERS
Function {SET_HC}=OBTAIN_HYPERCUBE(SET_NORMAL_CLUSTERS)
For i=1...SET_NORMAL_CLUSTERS
        For j=1 ...n
        SET_HC(i,j,1)=FIND_MAXIMUM(SET_NORMAL_CLUSTERS(i,j))
                SET_HC(i,j,2)=FIND_MINIMUM(SET_NORMAL_CLUSTERS(i,j))
Return{SET_HC}
Algorithm 4: FIND_MAXIMUM
Function POINT=FIND_MAXIMUM(SET_POINTS)
RETURN (FIRST_ELEMENT(MERGE_SORT(SET_POINTS))
Algorithm 5: FIND_MINIMUM
Function POINT=FIND_MAXIMUM(SET_POINTS)
RETURN (LAST_ELEMENT(MERGE_SORT(SET_POINTS))
```

Both FIND_MAXIMUM and FIND_MINIMUM use a comparison-based sorting algorithm, particularly, the Merge-Sort method, to order each dimension individually and return the first and the last element of the set of ordered values. SET_HC is a 3x3 data structure where the first dimension identifies each cluster of normal behavior, the second dimension the axis considered and the third dimension indicates the maximum (1) and the minimum (2) value. SET_HC contains the information that defines the vertices of the hypercubes. As in the previous case, this step is only needed to be implemented once, and the result obtained, SET_HC will be used to implement the outlier detection algorithm. The complexity of the algorithms is drastically reduced by considering hypercubes of normal behavior instead of each one of the individual data points.

D. Outlier Metric:

Once the different clusters of normal behavior have been identified and characterized by its layout pattern, in order to check the validity of a new observation read by an IoT device 100, an outlier metric is defined. Ideally the metric has to be computationally efficient to be implemented in a wide variety of hardware devices with different memory and computational capabilities. From the variety of possible metrics presented in the literature, the proposed method implements a modified version of angle-based outlier detection. Angle-based detection is typically considered a distance based metric that also considers the angle between the outlier candidate and the rest of elements that define a normal behavior. Intuitively, if an observation is not an outlier will be close to one of the clusters that defines normal behavior, and because of its closeness the angle that form the candidate to outlier and any other pair of points will be big (and will have a high variance). Inversely, an observation that is an outlier will be far away from the set of normal behaviors and as such its angle will be small (and its variance will be reduced when compared to a normal behavior observation). As a result, small values correspond to high probability of outlierness, as small angles are present when the distance is large. In general, angle-based metrics are more stable than density-based or distance- based and as such tends to produce better results.

In the traditional implementation, angle-based metrics are applied over all the observations that define normal behavior, which implies computationally a very expensive process. In this method, given the set of hypercubes defined by the normal behavior clusters, SET_HC, the metric is only applied against the points that define each hypercube. As a result, the complexity of the outlier metric is drastically reduced, as only needs to be compared against the 2n points that define each hypercube. If a new item is an outlier or a non-outlier when compared to the hypercube, it will remain the same against all the point inside the hypercube, as the hypercube captures the extreme cases of the normal behavior cluster.

The algorithm OUTLIER_METRIC; given a new OBSERVATION read by an IoT device 100, and the set of hypercubes SET_HC, calculates an ANGLE_METRIC against each one of the hypercubes than define the set of normal behavior, and return the maximum angle obtained. If an observation is an outlier it needs to be an outlier against all normal behavior hypercubes, and as such the maximum value is returned.

```
Algorithm 6: OUTLIER_METRIC
Function OUTLIER_METRIC=OUTLIER_METRIC (OBSERVATION, SET_HC)
VALUE=0
For i=1...SET_HC
        OUTLIER_VALUE(i)=ANGLE_METRIC(OBSERVATION, SET_HC(i))
Return{MAXIMUM(OUTLIER_VALUE)}
```

The function ANGLE_METRIC, given the OBSERVATION and a given hypercube of a normal cluster, SET_HC(i), returns and OUTLIER_METRIC defined as the maximum value of the angles between the OBSERVATION and all pairs of points of SET_HC(i) that define the hypercube, weighted by the distance between the points. As a hypercube is defined by 2n points, there are $\binom{2n}{2} = \frac{2n!}{2(2n-2)!}$ different set of points to try the angles. Considering the computational limitations of IoT devices 100, in general the limit is around n=8 that gives a total of 120, or n=10 that gives a total of 190 angles to calculate per hypercube.

```
Algorithm 7: ANGLE_METRIC
Function VALUE=ANGLE_METRIC(OBSERVATION, POINTS)
For i =1...2n-1
        Forj=i...2n-1
        VALUES(i,j)=ANGLE(OBSERVATION, POINTS(i,j), POINTS(i,j+1)) /
DISTANCE (OBSERVATION, POINTS(i,j), POINTS(i,j+1))
Return{MAXIMUM(VALUES)}
```

The function ANGLE returns the angle formed between OBSERVATION and POINTS(i,j) and POINT(i,j+1), that correspond to a pair of points of the hypercube weighted by the distance between the points, i.e. the angle is weighted less if the corresponding points are far from the query point. Because a change in the order of the POINTS does not change the value of the angles, there is no need to try all the combinations but just the relevant ones, as implemented. In an embodiment, the function distance returns the weighted Euclidean distance between OBSERVATION, POINTS(i,j) and POINTS(i,j+1). As in the previous case, changing the order of the POINTS does not affect the distance. Formally, representing the dot product with a point, these two functions can be implemented as:

Function ANGLE (OBSERVATION, POINT1, POINT2)

$$\text{return } \frac{(OBSERVATION-POINT1).(OBSERVATION-POINT2)}{\sum_{i=1}^{n}(OBSERVATION(i)-POINT1(i))\sum_{i=1}^{n}(OBSERVATION(i)-POINT1(i))}$$

FUNCTION DISTANCE (OBSERVATION, POINT1, POINT2)

$$\text{Return } \frac{\sqrt{\sum_{i=1}^{n}(OBSERVATION(i)-POINT1(i)}}{\sqrt{\sum_{i=1}^{n}(OBSERVATION(i)-POINT2(i)}}$$

The combination of these functions from Algorithm 6 returns a metric that indicates the degree to which the OBSERVATION is an outlier. Potentially, this step of the algorithm can be implemented, centrally, if there is no privacy limitations of the data, or given IoT devices 100 with enough computational capabilities, in the device itself, thus avoiding sending the actual read of the sensor to a central computer.

E. Outlier Identification:

Two different outlier identification approaches can be implemented: individual outlier identification and combined outlier identification.

The individual outlier identification focusses on labeling each individual observation of an IoT device 100 as an outlier or a non-outlier based on the OUTLIER_VALUE obtained in the previous step (i.e. a maximum value of the angles between an observation and pairs of the hypercube). In an embodiment, this is implemented using a threshold; if the value is smaller than a threshold then OBSERVATION is considered an outlier and can be processed as such. This process can imply different actions depending on the application, from just deleting the value, to apply a correction or being sent to a central repository for further analysis. In this approach a THRESHOLD value is defined. In general, a value of .05 to .2 can be used depending on how extreme the outliers identified have to be.

The combined approach does not treat the observations of the IoT devices 100 individually. Instead it ranks a set of observations, and the top elements of the ranking are considered outliers. The ranking is implemented by considering the OUTLIER_VALUE obtained by the IoT devices 100, and the order will provide a rank of outlierness. The ranking of outliers can be done continuously in time, where every time a new OUTLIER_VALUE is received the OBSERVATIONS are re-ranked. The ranking can also be done for a given time window or for a given geographical area, and in this context the OBSERVATIONS and their associated OUTLIER_VALUE received during that time window will be ranked after the window is over. For this approach the parameter O is used to identify the subset of observations of the ranking that are considered outliers. This parameter O is defined, particularly, as a number, i.e. identify the top O outliers, or as a percentage of the observations. Although the parameter depends on the frequency with which IoT devices 100 read observations, in real cases, 50 is enough. If it is expressed as a percentage, should be in the area of .1%, beyond that not outliers will be captured.

It should be noted that the values provided for the detailed parameters (MAX_CLUSTERS, CLUSTERING, METRIC, n, number of outliers O, MIN_BEHAVIOR, THRESHOLD) are based on empirical experience. In general, for a concrete case the definition of these values will depend on elements like the number of normal behaviors, dimension of the observations produced by the IoT devices, computing resources available, etc.

The proposed method can be implemented in the IoT architecture in different ways each one providing different advantages and limitations. In any of the possible implementations, Steps A-C are preferably executed in the central computing platform 300 because: it requires to have access to a historic dataset of the architecture in order to be able to identify non-outlier behaviors of the system; requires extended computational capabilities to run the clustering methods and its optimization over large historic datasets; needs to have access to the information provided by all the IoT devices 100 of the IoT architecture.

The method can be implemented over the following architectures: Global Architecture, Local Architecture, Global/Local Architecture and Edge Architecture.

In the Global Architecture implementation, the observations of the IoT devices 100 are sent to the central computing platform 300 and the central platform also implements steps D and E of the method. Given that the central architecture has access to all observations, it can implement both the individual outlier detection and the combined outlier detection as described in step E. The central computing platform 300 is then responsible to implement the action associated with the identification of outliers, which can be to alert an IoT device 100 about that outlier, to stop the IoT device 100 for a while, or just collect and visualize the outliers. Some of the advantages of this implementation include: the resources of the central computing platform 300 can easily and efficiently implement step D and E; and both individual and combined outlier detection approaches can be implemented. The main limitations are: privacy concerns, the data send over the network is the original observation of the IoT device 100, which in some applications 400 can arise privacy limitations; the latency of the results has to include the time to send the observation to the central repository and the processing time.

In the Local Architecture implementation, steps D and E are implemented locally in the IoT device 100. As a result, only the individual outlier detection of step D can be implemented as the IoT device 100 only has access to its own observations. In this implementation, after the central computing platform 300 has processed steps A, B and C, it sends SET_HC, the data structure that defines the set of normal behaviors, to each one of the IoT devices 100. This needs to be done only once. The IoT device 100 is then responsible to implement the action associated with the identification of outliers. Advantages of this implementation include: This approach is very relevant when privacy of the observations is a must, in this case no observations are send over the IoT network and they stay local to the IoT device 100, so privacy is guaranteed; In this approach there is no latency caused by sending information over the network. The main limitations are: it is not possible to implement the combined outlier identification defined in step E, because there is no central repository that has access to the rankings in order to guarantee privacy; and IoT devices 100 need to be computationally capable of implementing step D and E.

In the Global/Local Architecture, as in the previous one, after the central computing platform 300 has processed steps A, B and C, sends SET_HC to each one of the IoT devices 100. Then, the device implements step D and sends the information regarding the OUTLIER_METRIC, i.e. the level of outlierness, to the central computing platform 300. The central computing platform 300 implements then step E of the method, and both local and global outlier identification can be implemented. The central computing platform 300 is also responsible to implement the action associated with the identification of outliers, which can require contact back the IoT device 100 that produced the outlier observation. This solution combines the advantages of the global and local architectures. The main advantages are: the privacy requirements of the data are respected as the computation of the OBSERVATION takes place on the IoT device and the information send over the network is just the OUTLIER_METRIC; can implement both local and global outlier identification. The main limitations are: the IoT device 100 should be able to implement step D; there is some latency to consider as the central repository implements step E.

The Edge Architecture creates multiple layers of Global/Local architectures in which the edge platform acts locally as the central computing platform 300. In this case, there can also be a local and a global approach. In the global approach step D and E are implemented in the gateway/edge 200. In the local implementation step D is implemented in the IoT device 100 and step E is done in the gateway 200. As such the edge platform can implement both the individual and combined outlier detection for the IoT devices 100 for which it has access. This approach is useful when the outlier detection is only needed in part of the network, otherwise the edge platforms will need to send the OUTLIER_VALUES to a central computing platform 300 to rank all the observations of the IoT devices 100. This approach has partially both the advantages and the limitations of the previous cases, but in case the IoT device 100 does not have the capability to run step D, it offers the possibility of keeping privacy if the edge is close enough to the IoT devices 100, i.e. avoiding that de observations leave the local network.

As previously explained, present invention presents a mechanism that identifies/ranks outliers based on observations of the IoT devices 100 of an IoT network. Three use cases of the invention are hereby presented, each one requiring a different architectural implementation:

- Prediction of outliers in real-time: This implementation requires a local architecture where the IoT devices 100 directly implement step D and step E. Outliers are identified by defining a threshold that is applied on the IoT device 100 over the level of outlierness obtained in step D. As such there is no latency and real-time implementation is possible. This implementation requires IoT devices 100 with enough computational capabilities. An example of an application can be temperature readings of an IoT device 100, were, if the observation is outside a predefined and known range of temperatures it raises an alarm.
- Historic Analysis of Outliers: This implementation requires a global architecture where the IoT devices 100 send the observations to the central computing platform 300 that implements steps D and E over the historic dataset. With this information it can be studied which one is the most common outlier, when it happens, its frequency, etc. It can also be implemented with an edge architecture in which step D is implemented in the edge and step E in the central IoT repository. Data privacy is an advantage for this approach. An example of this application can be a chemical plant that monitors a production process. The historic view of anomalies, its frequency and temporality provide a view of the main outliers in the process and of the possible cause effect among them.
- Geographical Identification of Outliers: Typically, every IoT device 100 of an IoT network has a physical location as part of an industrial plant, an urban environment, or any environment where the network has been deployed. As such the study of the locations and the temporal association of the outliers are very relevant to identify the existence of chain of outliers within the network. As was previously mentioned, the IoT device 100 when sending the observation or the level of outlierness also sends its own ID. The central computing platform 300 can then visualize where the outliers are being produced and the location relation between the different outliers detected. An example of this application can be a network with IoT devices 100 that count cars in streets. The historic view, its frequency and temporality, combined with the geographical location of the outliers, provides a view of traffic jams.

Present invention has as main advantages compared to the state of the art:

- Non-Parametrical. The method does not need any parameter to rank outliers - all parameters needed can be assigned a value recommended by the method because due to the metric implemented the outlier values are isolated from the application. This is a big advantage when compared to the majority of the techniques for outlier detection that require some parameters do be defined by trial and error.

- Efficient Implementation. The method is designed to be implemented efficiently in different architectures, due to the separation between the offline and the online parts of the method. While the offline part of the method (steps A, B and C) has high computational needs, the real-time part can be implemented in different architectures to adapt to the computational requirements.

- Flexible Architecture. One of the key elements of the methods is the ability to adapt to different IoT architectures and adjust the execution of each step of the methods in different parts of the architecture. As a result, different architectures provide different advantages that are optimum for different type of applications.

- Data Privacy. Data privacy is key in case the IoT architecture is dealing with personal data, for example, any sensor attached to a person, and as such is extremely important to have methods that guarantee that privacy. The technique proposed guarantees privacy by avoiding sending any personal data over the IoT network and running it locally, which requires devices with enough capability to implement at least step D of the method.

- Latency. The flexibility of the method allows for different implementations than can reduce the latency to 0 as step D and E can be implemented in the IoT device 100 if it has enough computer power. Different implementations provide different levels of latency to satisfy the different applications that IoT architecture can support.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

**Claims**

1.  A computer implemented method for outlier detection of data provided by Internet of Things (IoT) devices, wherein a set of history data observations about one or more IoT devices (100) for different types of applications (400) is stored in a central computing platform (300), the set of history data comprising expected behaviors of the applications (400) and also outliers, the method comprising:

a) performing, by one or more processors, clustering to at least part of the set of history data, generating a given number of clusters as a result;

b) ranking, by one or more processors, the given number of clusters according to a number of items in each cluster, and labeling the ranked number of clusters as normal-behavior clusters or as non-normal behavior clusters;

c) identifying, by one or more processors, a set of n-dimensional points of each labeled normal-behavior cluster by defining the limits thereof by means of applying a layout pattern, providing one or more n-dimensional pattern elements as a result, and obtaining a maximum and a minimum value of each n-dimensional point within each n-dimensional pattern element using a comparison-based sorting algorithm;

d) given a new data observation read by a given IoT device (100), applying, by one or more processors, an angle-based outlier detection metric to the points that define each n-dimensional pattern element, said angle-based outlier detection metric computing a maximum value of the angles between the new data observation and pairs of the n-dimensional element, weighted by a distance between the points; and

e) indicating, by one or more processors, whether the new data observation is an outlier in view of said computed maximum value.

2. The method of claim 1, further comprising comparing the computed maximum value with a threshold, and indicating that the new data observation is an outlier if the computed maximum value is smaller than the threshold.

3. The method of claim 2, further comprising deciding, by one or more processors, an action to apply to the computed maximum value depending on a specific application (400), the action comprising one of: deleting the computed maximum value, applying a correction to the computed maximum value, sending the computed maximum value to a central repository for further analysis, alerting or stopping the given IoT device (100).

4. The method of claim 1, wherein:

step d) comprises receiving a plurality of new data observations read by a plurality of IoT devices (100), applying the angle-based outlier detection metric to each received new data observation, so that computing a maximum value for each received new data observation; and

step e) comprises ranking the plurality of new data observations from a higher to a lower computed maximum value.

5. The method of claim 4, wherein the ranking is performed continuously in time as new data observations are received or only after a given time interval is over or for a given geographical area.

6. The method of any one of the previous claims, wherein the clustering is performed via a clustering algorithm comprising one of: k-means, k-medoids, k-medians, fuzzy c-means or a Gaussian mixture model.

7. The method of any one of the previous claims, wherein step a) further comprises applying a cohesion metric to the generated given number of clusters to maximize cohesion between them, said cohesion metric comprising one of Silhouette, Dunn or Davies-Bouldin, preferably Silhouette.

8. The method of any one of the previous claims, wherein the layout pattern comprises a hyperrectangle, a rectangle or a prism.

9. The method of any one of the previous claims, wherein the given number of clusters generated in step a) is between 1 and 10.

10. The method of any one of the previous claims, wherein steps a) to c) are executed off-line by the central computing platform (300).

11. The method of any one of the previous claims, wherein steps d) and e) are executed by the central computing platform (300), either offline or in real time.

12. The method of claim 1, 2 or 3, wherein steps d) and e) are executed by the given IoT device (100).

13. The method of any one of the previous claims 1 to 9, wherein steps d) and e) are executed by a Gateway (200) operatively connected to the given IoT device (100).

**14.** A computer system for outlier detection of data provided by Internet of Things (IoT) devices, comprising:

at least one memory; and
at least one processor communicatively coupled to the at least one memory, the at least one processor being configured to execute at least the method of claim 1.

**15.** A non-transitory computer readable medium storing instructions, which when executed by a processor cause the processor to perform the method of any one of the claims 1 to 9.

**Fig. 1**

**Fig. 2**

Europäisches
Patentamt

European
Patent Office

Office européen
des brevets

# EUROPEAN SEARCH REPORT

Application Number

EP 20 38 3120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/134061 A1 (GABER SHIRI [IL] ET AL) 30 April 2020 (2020-04-30) * paragraphs [0022], [0045]; figures 3,5 * ----- | 1-15 | INV. G06F16/28 |

TECHNICAL FIELDS
SEARCHED (IPC)

G06F

The present search report has been drawn up for all claims

| Place of search | Date of completion of the search | Examiner |
|---|---|---|
| The Hague | 14 May 2021 | Hackelbusch, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 38 3120

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2021

| Patent document cited in search report | Publication date | Patent family member(s) | Publication date |
|---|---|---|---|
| US 2020134061 A1 | 30-04-2020 | NONE | |

EPO FORM P0459

For more details about this annex : see Official Journal of the European Patent Office, No. 12/82

## REFERENCES CITED IN THE DESCRIPTION

**Non-patent literature cited in the description**

- **HODGE, V. ; AUSTIN, J.** *A survey of outlier detection methodologies. Artificial intelligence,* 2004, vol. 22 (2), 85-126
- **CHANDOLA, V. ; BANERJEE, A. ; KUMAR, V.** *Anomaly detection: A survey. ACM computing surveys,* 2009, vol. 41 (3), 15
- **CAMPOS, G.O. ; ZIMEK, A. ; SANDER, J. ; CAMPELLO, R.J. ; MICENKOVÁ, B. ; SCHUBERT, E. ; ASSENT, I. ; HOULE, M.E.** On the evaluation of unsupervised outlier detection: measures, datasets, and an empirical study. *Data Mining and Knowledge Discovery,* 2016, vol. 30 (4), 891-927
- **WANG, H. ; BAH, M.J. ; HAMMAD, M.** Progress in Outlier Detection Techniques: A Survey. *IEEE Access,* 2019, vol. 7, 107964-108000
- Detection, synthesis and compression in mammographic image analysis with a hierarchical image probability model. **SPENCE ; CLAY ; LUCAS PARRA ; PAUL SAJDA.** Proceedings IEEE workshop on mathematical methods in biomedical image analysis. IEEE, 2001
- Cardwatch: A neural network based database mining system for credit card fraud detection. **ALESKEROV, E. ; FREISLEBEN, B. ; RAO, B.** In Proceedings of the IEEE Conference on Computational Intelligence for Financial Engineering. 1997
- **JABEZ, JA ; B. MUTHUKUMAR.** Intrusion detection system (IDS): anomaly detection using outlier detection approach. *Procedia Computer Science,* 2015, vol. 48, 338-346
- A Real-Time Fraud Detection Algorithm Based on Intelligent Scoring for the Telecom Industry. **NIU, KUN et al.** International Conference on Networking and Network Applications (NaNA). IEEE, 2016
- **AHMED ; MOHIUDDIN ; ABDUN NASER MAHMOOD ; MD RAFIQUL ISLAM.** A survey of anomaly detection techniques in financial domain. *Future Generation Computer Systems,* 2016, vol. 55, 278-288